# EUROPEAN PATENT APPLICATION

(11) **EP 1 850 524 A1**
(43) Date of publication of application: **31.10.2007**
(21) Application number: 06290699.5
(22) Date of filing: 28.04.2006
(51) Int. Cl.: H04L 5/02, H04L 27/26, H04L 5/06

(54) **A method of allocating sub-carriers, base station, and end terminal for use in OFDM transmission**

(71) Applicant: Alcatel Lucent, 75008 Paris (FR)
(72) Inventor: Grob-Lipski, Heidrun, 72181 Starzach (DE); Weber, Dr. Andreas, 71032 Böblingen (DE)
(74) Representative: Richardt, Markus Albert

(57) **Abstract**

A method of allocating sub-carriers (SCi) for communication with at least one end terminal in OFDM transmission, comprising the steps of:
- defining mutually spaced resource regions (RGRi) of a first type based on an available spectrum of sub-carriers, each of said regions comprising a number of consecutive sub-carriers for a number of consecutive OFDM symbols;
- defining mutually spaced resource regions (RBRj) of a second type based on the available spectrum of sub-carriers, each of said regions comprising a number of consecutive sub-carriers for a number of consecutive OFDM symbols;
- choosing a number of mutually isolated or mutually adjacent sub-carriers from at least one of said first type resource regions for distributed sub-carrier allocation;
- choosing a number of mutually adjacent sub-carriers from at least one of said second type resource regions for localised sub-carrier allocation;
- allocating the chosen sub-carriers for communication with the at least one end terminal.

## Description

### Background of the invention

The present invention relates to a method of allocating sub-carriers for communication with at least one end terminal in OFDM transmission.

The present invention also relates to a base station for use in OFDM transmission to at least one end terminal as well as to an end terminal, particularly a mobile station, for use in OFDM communication with a base station of the above-defined type.

Furthermore, the present invention relates to a computer program product comprising program code sequences for downloading on a base station for use in OFDM transmission to at least one end terminal and / or for installing on an end terminal, particularly a mobile station, for use in OFDM communication with said base station.

In Frequency-Division Multiplexing (FDM), multiple signals are sent out at the same time, but in different frequencies. In OFDM, a single transmitter transmits on many (typically dozens to thousands) different orthogonal frequencies. These frequencies are also referred to as sub-carriers, the totality of available sub-carriers forming an OFDM spectrum.

A (geographical) transmission area for OFDM transmission is subdivided into a number of OFDM transmission cells, each of them being served by a respective base station or NodeB. User equipment, e.g. mobile stations, present inside the OFDM transmission cells are allocated resources, i.e. sub-carriers, for communication inside the OFDM transmission system. Said allocation of resources is controlled by the base stations.

### Object of the invention

It is the object of the present invention to provide a method of performing resource allocation, i.e. allocation of sub-carriers, in OFDM transmission which allows fast resource allocation with low signalling effort while permitting fast adjustment to changing system settings or changing system conditions, as well as to provide a base station, an end terminal, and a computer program product for use in an OFDM transmission system capable of translating said method into practise.

### Summary of the invention

According to a first aspect of the present invention the object is achieved by providing a method of the above-defined type, comprising the steps of:
- defining mutually spaced resource regions of a first type based on an available spectrum of sub-carriers, each of said regions comprising a number of consecutive sub-carriers for a number of consecutive OFDM symbols;
- defining mutually spaced resource regions of a second type based on the available spectrum of sub-carriers, each of said regions comprising a number of consecutive sub-carriers for a number of consecutive OFDM symbols;
- choosing a number of mutually isolated or mutually adjacent sub-carriers from at least one of said first type resource regions for distributed sub-carrier allocation;
- choosing a number of mutually adjacent sub-carriers from at least one of said second type resource regions for localised sub-carrier allocation;
- allocating the chosen sub-carriers for communication with the at least one end terminal.

According to a second aspect of the present invention the object is achieved by providing a base station for use in OFDM transmission to at least one end terminal, comprising:
- means for partitioning a first part of an available spectrum of sub-carriers into mutually spaced resource regions of a first type, each of said regions comprising a number of consecutive sub-carriers for a number of consecutive OFDM symbols;
- means for partitioning a remaining part of the available spectrum of sub-carriers into mutually spaced resource regions of a second type, each of said regions comprising a number of consecutive sub-carriers for a number of consecutive OFDM symbols;
- means for selecting a number of mutually isolated or mutually adjacent sub-carriers from at least one of said first type resource regions for distributed sub-carrier allocation;
- means for selecting a number of mutually adjacent sub-carriers from at least one of said second type resource regions for localised sub-carrier allocation;
- means for allocating the selected sub-carriers for communication with the at least one end terminal.

According to a third aspect of the present invention the object is achieved by providing an end terminal, particularly a mobile station, for use in OFDM communication with a base station according to said second aspect of the present invention, said end terminal comprising means for establishing and / or maintaining said communication on the basis of the allocated sub-carriers.

According to a fourth aspect of the present invention the object is achieved by providing a computer program product of the above-defined type, wherein said program code sequences implement on said base:
- means for partitioning a first part of an available spectrum of sub-carriers into mutually spaced resource regions of a first type, each of said regions comprising a number of consecutive sub-carriers for a number of consecutive OFDM symbols;
- means for partitioning a remaining part of the available spectrum of sub-carriers into mutually spaced resource regions of a second type, each of said regions comprising a number of consecutive sub-carriers for a number of consecutive OFDM symbols;
- means for selecting a number of mutually isolated or mutually adjacent sub-carriers from at least one of said first type resource regions for distributed sub-carrier allocation;
- means for selecting a number of mutually adjacent sub-carriers from at least one of said second type resource regions for localised sub-carrier allocation;
- means for allocating the selected sub-carriers for communication with the at least one end terminal;
and wherein said program code sequences further implement on said end terminal means for establishing and / or maintaining said communication on the basis of the allocated sub-carriers.

In this way, said program code sequences enable performing the method in accordance with said first aspect of the present invention when executed on suitable data processing means comprised in base station and / or the at least one end terminal, respectively.

Thus, the present invention achieves fast allocation of resources for communication with end terminals with only low signalling effort owing to an adaptable pre-definition of a resource structure, which can be further refined (adapted), e.g. for interference coordination purposes. In this context, said resource allocation can be performed in downlink and / or in uplink, i.e. resource allocation for communication with an end terminal (communication between a base station and said end terminal) can generally be performed under control of the base station and / or under control of the end terminal.

In order to achieve very low signalling effort, in an embodiment of the method in accordance with the present invention the step of defining said first type resource regions includes equally spacing said first type resource regions.

Alternatively or additionally, the step of defining said second type resource regions includes equally spacing said second type resource regions.

As already stated above, particularly for interference coordination purposes, in a further embodiment of the method in accordance with the present invention the latter further comprises the step of adapting a size and / or spectral location of said first type resource regions and / or said second type resource regions in response to transmission-related information, e.g., traffic conditions, transmission reliability, signal quality or the like.

In the context of interference coordination, in yet another embodiment of the method in accordance with the present invention the latter further comprises the step of defining at least respective parts of a number of said first type resource regions and /or at least respective parts of a number of said second type resource regions as having a specific OFDM transmission characteristic, particularly a reduced transmission power. In other words: in accordance with embodiments of the present invention a number of (whole) first and / or second type resource regions can be assigned a specific OFDM transmission characteristic. Alternatively or additionally, only parts of first and / or second type resource regions can be assigned a specific OFDM transmission characteristic. In this way, sub-carrier allocation can be achieved while taking into account a spatial distribution of end terminals in an OFDM transmission cell in terms of cell center vs. cell periphery.

Particularly fast allocation of resources in connection with low signalling effort is possible if, in accordance with a further embodiment of the inventive method, the latter further comprises the step of storing structure information concerning a resource structure formed by the defined first and second type resource regions at the at least one end terminal and / or at least one base station in operative connection with the end terminal. Optimum reduction of signalling effort is achieved if both base station and end terminal are in possession (i.e., store) said structure information.

In yet another embodiment of the method in accordance with the present invention the defining steps comprise:
- communicating a required number of at least one of said first and second type resource regions;
- communicating a spectral location of a first predetermined one of the at least one of said first and second type resource regions;
- communicating a size of the at least one of said first and second type resource regions;
- determining respective spectral locations of said first and second type resource regions.

Further advantages and characteristics of the present invention can be gathered from the following description of preferred embodiments described by way of example only with reference to the enclosed drawings. Features mentioned above as well as below can be used in accordance with the invention either individually or in conjunction. The embodiments mentioned are not to be understood as an exhaustive enumeration but rather as examples with regard to the underlying concept of the present invention.

### Brief description of the drawings

- Fig. 1: is a schematic diagram of a transmission cell in an OFDM transmission system to be operated using embodiments of the method in accordance with the present invention;
- Fig. 2: is a schematic block diagram of a base station for use in the OFDM transmission system of Fig. 1;
- Fig. 3: is a schematic block diagram of an end terminal for use in the OFDM transmission system of Fig. 1;
- Fig. 4: is a schematic diagram of a sub-carrier spectrum for use in OFDM transmission illustrating localised and distributed resource allocation;
- Fig. 5: is a schematic diagram of a first example of sub-carrier allocation using an embodiment of the method in accordance with the present invention;
- Fig. 6: is a schematic diagram of a defined resource structure for sub-carrier allocation in accordance with the present invention;
- Fig. 7: is a schematic diagram showing an adapted defined resource structure for sub-carrier allocation in accordance with the present invention;
- Fig. 8: is a schematic diagram showing a further adapted resource structure for sub-carrier allocation in accordance with the present invention;
- Fig. 9: is a schematic diagram of a further example of sub-carrier allocation using the method in accordance with the present invention;
- Fig. 10: is a schematic diagram of a further example of sub-carrier allocation using the method in accordance with the present invention;
- Figs. 11 a, b: are schematic diagrams of further examples of sub-carriers allocation using an embodiment of the method in accordance with the present invention; and
- Fig. 12: is a flow chart for illustrating signalling used in the context of an embodiment of the method in accordance with the present invention.

### Detailed description

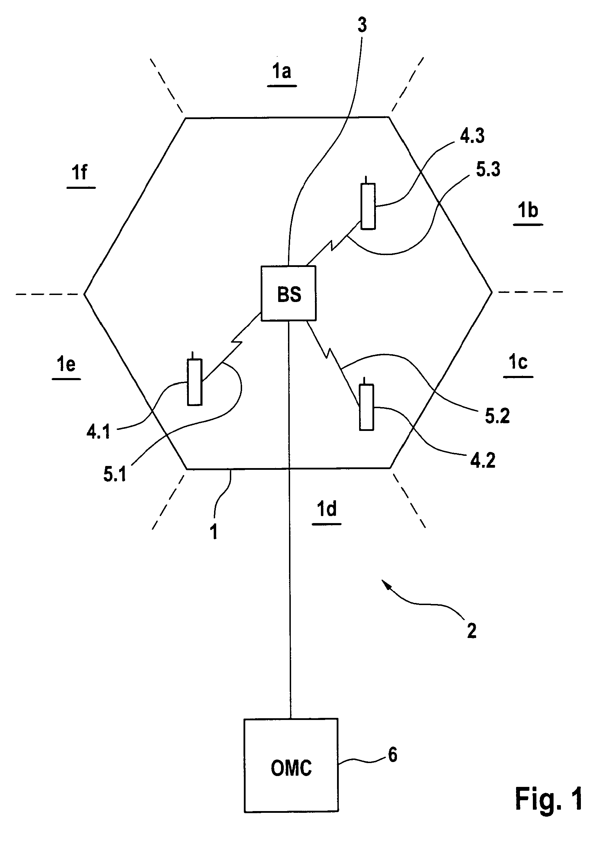

Fig. 1 is a schematic diagram of an OFDM transmission cell 1 as comprised in an OFDM transmission system 2 further comprising a number of additional transmission cells such as 1a - 1f. Transmission cell 1 (like substantially identical transmission cells 1a - 1f) comprises a base station 3 and a number of end terminals (user equipment (UE), preferably mobile stations) 4.1 - 4.3 operatively connected for communication purposes with base station 3 via respective radio links 5.1 - 5.3.

As further indicated in Fig. 1, base station 3 is connected with a central node 6 of OFDM transmission system 2, said central node also being referred to as Operations Maintenance Center (OMC) or Operations & Maintenance (O&M).

For communication within the OFDM transmission system 2, base station 3 defines and allocates (radio) resources to individual end terminals 4.1 - 4.3 present inside the associated transmission cell 1.

OMC 6 functions as a control unit for controlling operation of base station 3, e.g. by providing software, i.e. program code sequences for installing on base station 3 as well as on end terminals 4.1 - 4.3. The software can be provided by downloading from the base station 3 or it can be preinstalled.

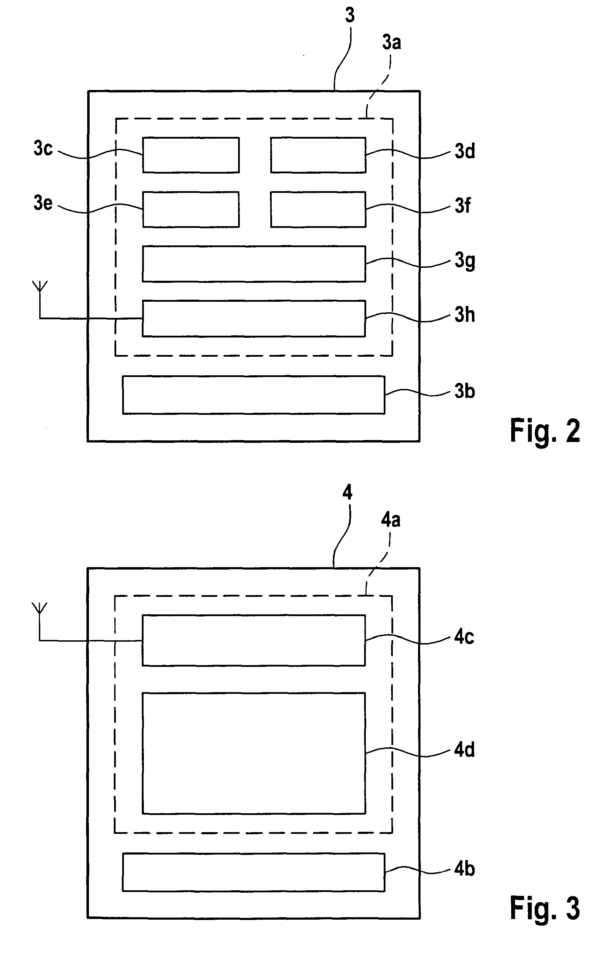

Fig. 2 is a schematic block diagram of a base station 3 used in the OFDM transmission system 2 of Fig. 1. Base station 3 generally comprises data processing means 3a and storage means 3b. In said data processing means, base station 3 further comprises first partitioning means 3c, second partitioning means 3d, first selecting means 3e, second selecting means 3f, allocating means 3g, and broadcasting means 3h. Means 3c - 3h are preferably devised at least partly in software form by means of software downloaded from OCM 6 (Fig. 1). Corresponding program code sequences and further operational information provided by OMC 6 are stored in storage means 3b.

First partitioning means 3c are adapted for partitioning a spectrum of sub-carriers available for OFDM transmission into mutually spaced resource regions of a first type, each of said regions comprising a number of consecutives sub-carriers for a number of consecutive OFDM symbols. Likewise, second partitioning means 3d are adapted for partitioning a remaining part of the available OFDM sub-carrier spectrum into mutually spaced resource regions of a second type, each of said regions comprising a number of consecutive sub-carriers for a number of consecutive OFDM symbols.

Said first type resource regions will hereinafter also be referred to as "resource group regions", and said second type resource regions will hereinafter also be referred to as "resource block regions".

First selecting means 3e are adapted for choosing or selecting a number of mutually isolated or mutually adjacent sub-carriers from at least one of said first type resource regions, i.e. resource group regions, for distributed sub-carrier allocation. Such sub-carriers will hereinafter also be referred to as a "resource group". The second selecting means 3f are adapted for choosing (selecting) a number of mutually adjacent sub-carriers from at least one of said second type resource regions, i.e. resource block regions, for localised sub-carrier allocation. Such sub-carriers will hereinafter also be referred to as a "resource block".

Allocating means 3g are adapted for allocating chosen / selected sub-carriers to the end terminals 4.1 - 4.3 (Fig. 1).

Any information on resource region definition, sub-carrier selection and / or sub-carrier allocation can be communicated to the end terminals 4.1 - 4.3 by means of broadcasting means 3h, preferably in broadcasting mode.

Fig. 3 is a schematic block diagram of an exemplary one of end terminals 4.1 - 4.3 in Fig. 1 which is generally denoted 4 in Fig. 3.

The end terminal 4 of Fig. 3, which can advantageously be devised as a mobile station for use in OFDM communication with the base station of Fig. 2, generally comprises data processing means 4a and storage means 4b. Within data processing means 4a, end terminal 4 further comprises receiving means 4c and communication establishing / maintaining means 4d. Means 4c, 4d are preferably devised at least partly in software form, wherein corresponding program code sequences can be downloaded from base station 3 (Fig. 2) or from OCM 6 (Fig. 1) via base station 3 and are stored in storage means 4b.

Communication establishing / maintaining means 4d are adapted for establishing /or maintaining an OFDM communication with the base station 3 (Fig. 2) on the basis of allocated sub-carriers.

Receiving means 4c are adapted for receiving broadcast information from base station 3 (Fig. 2).

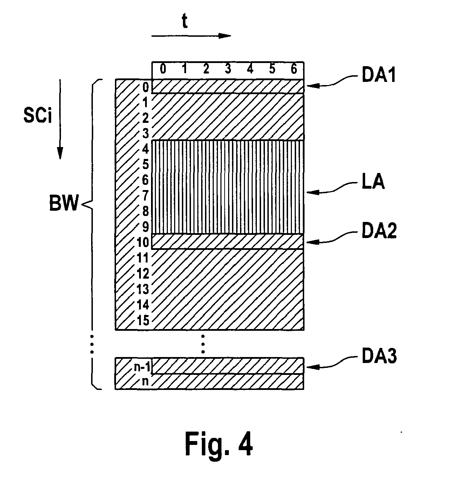

Embodiments of the method of allocating sub-carriers in OFDM transmission in accordance with the present invention as well as functions of the individual means and entities described above with reference to Figs. 1 to 3 will now be explained in detail referring to appended Figs. 4 to 12.

Fig. 4 is a schematic diagram of a sub-carrier spectrum used for OFDM transmission in the OFDM transmission system 2 of Fig. 1.

Generally, as depicted in Fig. 4, a bandwidth BW available for OFDM transmission and including a number of control channels (not shown) is subdivided into a number of sub-carriers SC (ranging from SC0 to SCn, generally referred to as SCi). Sub-carriers SCi are used for transmission of consecutive OFDM symbols in time, a time coordinate being denoted t in Fig. 4.

As known to a person skilled in the art, different sub-carriers SCi generally have different transmission qualities due to, e.g., interference or different transmission paths with different qualities.

End terminals 4.1 - 4.3 (Fig. 1) are assigned sub-carriers SCi by base station 3 for use in OFDM communication, i.e., they are allocated sub-carriers or resources.

As per Fig. 4, two different allocation schemes can be distinguished: localised allocation LA involves blockwise allocation of sub-carriers according to their quality. Blockwise (localised) allocation of sub-carriers can alternatively be referred to as allocating a number of mutually adjacent sub-carriers.

In contrast to localised allocation, distributed allocation DAi involves allocating sub-carriers which are spread broadly over the available bandwidth BW in an ideally but not necessarily equidistant fashion. The distributed allocation scheme is advantageously used if, e.g., channel quality measurement is not reliable enough for localised allocation.

Fig. 4 shows an example for distributed allocation using three sub-carriers at DA1 - DA3. In the present document, distributed allocation of sub-carriers SCi is also referred to as allocating a number of mutually isolated sub-carriers or as allocating a number of mutually adjacent sub-carriers provided that they are non-consecutive.

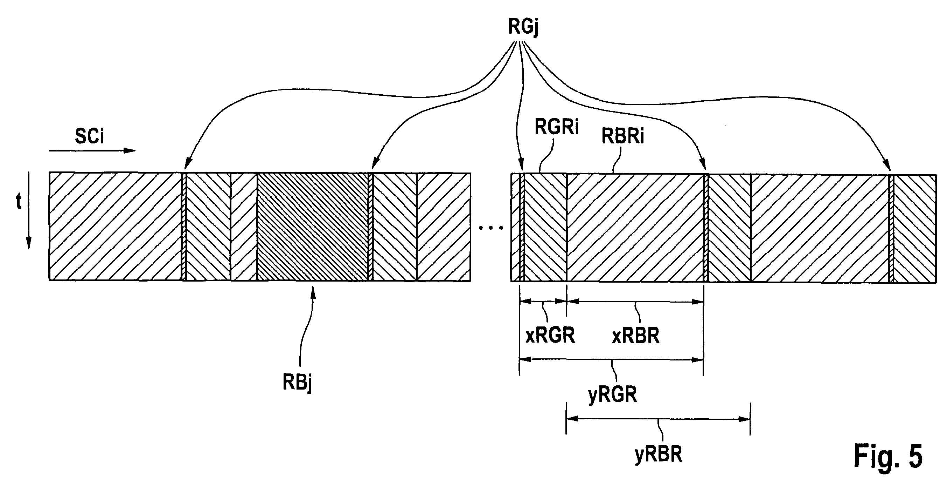

Fig. 5 shows a schematic diagram of a first example of sub-carrier allocation using an embodiment of the method in accordance with the present invention. Note that the time t and sub-carrier SCi axes have been flipped with respect to the diagram of Fig. 4.

In accordance with the present invention the available spectrum of OFDM sub-carriers as depicted in Fig. 4 is partitioned into a number of mutually spaced resource regions of a first type and of a second type, respectively. As stated above, said first type regions are referred to as resource group regions. Resource group regions form part of the whole available bandwidth BW (Fig. 4) and comprise a number of consecutive sub-carriers SCi for a number of consecutive time symbols, i.e. consecutive OFDM symbols in time. In the embodiment of Fig. 5 said resource group regions are denoted RGRi, they have a common size xRGR in terms of comprised sub-carriers, they are equally spaced with a period yRGR in terms of sub-carriers (yRGR > xRGR), and they are used for distributed allocation DAi.

The second type of resource regions is referred to as resource block regions RBRi. They form part of the whole available bandwidth BW and comprise a number of consecutive sub-carriers SCi for a number of consecutive time symbols. Resource block regions, too, are equally spaced by a measure yRBR defined in terms of a number of sub-carriers, said distance being greater than a size xRBR (i.e., yRBR > xRBR) of an individual resource block region, as depicted in Fig. 5. As can further be gathered from Fig. 5, xRGR + xRBR = yRGR = yRBR.

Resource block regions RBRi are used for localised allocation of sub-carriers.

Within resource group regions RGRi and resource block regions RBRi, respectively, resource groups RGi and resource blocks RBi, respectively, are the smallest resource units used for allocation.

Still referring to Fig. 5, a resource group RGj consists of a number of non-consecutive, preferably, equally spaced single or consecutive sub-carriers for a number of consecutive time symbols. Resource groups such as RGj are used for a distributed allocation within resource group regions (RGRi).

Resource blocks RBj consists of a number of consecutive sub-carriers for a number of consecutive time symbols. Resource blocks RBj are used for localised allocation within resource block regions RBRi.

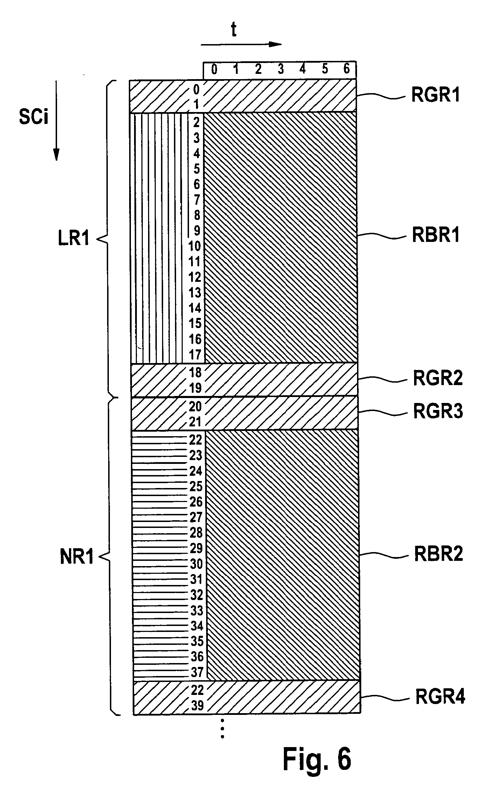

Fig. 6 shows a schematic diagram of a defined resource structure for sub-carrier allocation in accordance with the present invention. In addition to defining first and second type resource regions, i.e. resource group regions and resource block regions, respectively, a number of said first type regions and / or second type regions or respective parts of a number of said first type regions and/or second type regions can be associated with at least one specific OFDM transmission characteristic, for instance a reduced transmission power. In the present document, resource group regions and resource block regions with reduced transmission power are referred to as low power regions LRi, whereas resource group regions and resource block regions with normal transmission power are referred to as normal power regions NRi.

As stated earlier, in the context of embodiments of the invention, respective parts of resource regions (first type or second type) can be assigned specific transmission-related characteristics. For instance, for interference coordination individual resource groups instead of entire resource regions can be assigned for transmission with reduced transmission power.

In Fig. 6, which shows part of the OFDM transmission spectrum including sub-carriers SCO-SC39, a first low power region LR1 includes resource group region RGR1 (SC0, SC1) and resource group region RGR2 (SC18, SC19) as well as resource block region RBR1 encompassing sub-carriers SC2 to SC17. Subsequent normal power region NR1 includes resource group regions RGR3, RGR4 and resource block region RBR2 encompassing sub-carriers SC20-SC21, SC38-SC39, and SC22 to SC37, respectively.

In this way, for a transmission on sub-carriers SC0 to SC19 from low power region LR1 a reduced transmission power is used regardless of allocation type (distributed or localised). For a transmission on sub-carriers SC20 to SC39 from normal power region NR1 a nominal transmission power is used regardless of allocation type (distributed or localised).

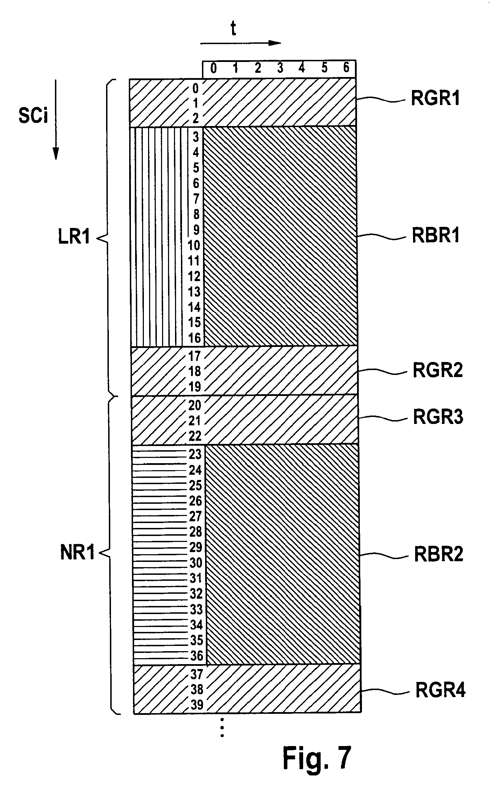

Fig. 7 shows a schematic diagram of an adapted defined resource structure for sub-carrier allocation in accordance with the present invention. Resource structure of Fig. 7 is based on the previously described structure of Fig. 6, the latter having, e.g., being adapted for reasons of required additional distributed allocation. Such an allocation may be required due to changing traffic conditions inside OFDM transmission cell 1 (Fig. 1).

The adapted resource structure of Fig. 7 comprises low power region LR1 and normal power region NR1, as previously defined with reference to Fig. 6. Inside low power region LR1 resource group region RGR1 now comprises sub-carriers SC0 to SC2, and resource group region RGR2 now comprises sub-carriers SC17 to SC19. Consequently, resource block region RBR1 has been reduced to comprising sub-carriers SC3 to SC16 only.

Within normal power region NR1, resource group region RGR3 now comprises sub-carriers SC20 to SC22, and resource group region RGR4 now comprises sub-carriers SC37 to SC39. Consequently, resource block region RBR2 has been reduced to comprising sub-carriers SC23 to SC36 only. This is equivalent to saying that a size of said first type regions and / or said second type regions is adapted in response to transmission-related information.

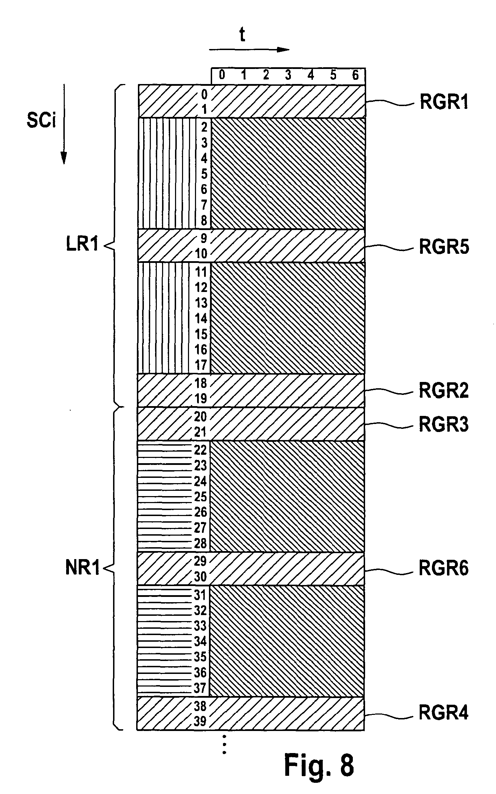

Fig. 8 shows a schematic diagram of a further adapted resource structure for sub-carrier allocation in accordance with the present invention. In the embodiment shown, low power region LR1 comprises a first resource group region RGR1 and a second resource group region RGR2 encompassing sub-carriers SC0, SC1 and SC18, SC19, respectively. Additionally, a normal power region NR1 comprises a third resource group region RGR3 and a fourth resource group region RGR4 encompassing sub-carriers SC20, SC21 and SC38, SC39, respectively. However, additionally and in contrast to the embodiment of Fig. 6, the resource structure of Fig. 8 comprises an additional resource group region RGR5 (sub-carriers SC9, SC10) in low power region LR1 and a further resource group region RGR6 (sub-carriers SC29, SC30) in normal power region LR1.

This is equivalent to saying that a spectral location of said first type regions and / or second type regions has been adapted in response to transmission related information, e.g., if additional resources are required for distributed allocation due to modified traffic conditions inside transmission cell 1 (Fig. 1).

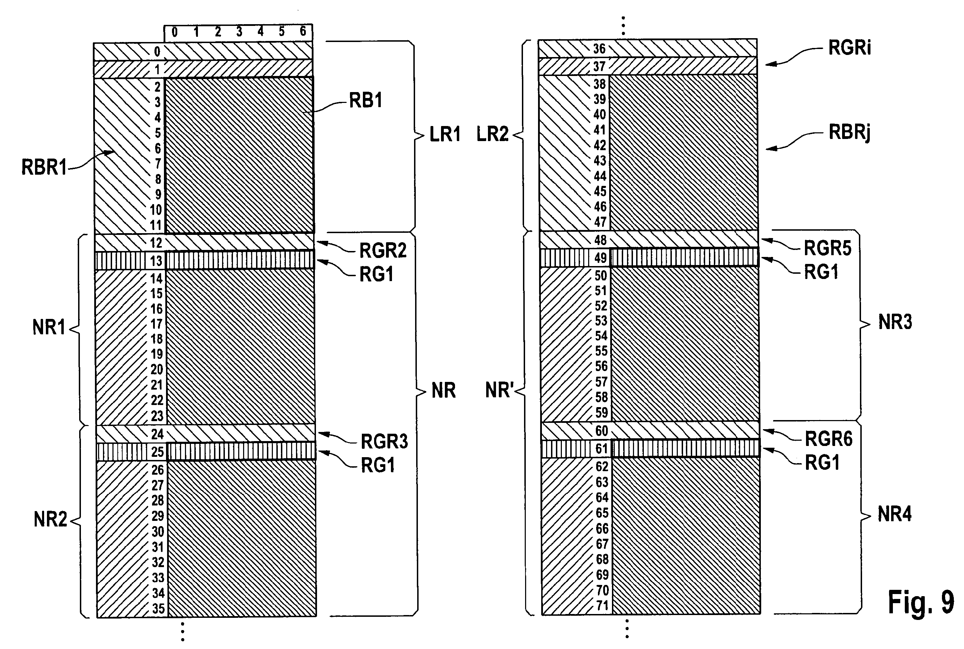

Fig. 9 shows a schematic diagram of a further example of sub-carrier allocation using the method in accordance with the present invention. In the embodiment shown, sub-carriers SC0 to SC11 constitute low power region LR1, and sub-carriers SC36 to SC47 constitute low power region LR2. Sub-carriers SC12 to SC23 constitute normal power region NR1, and sub-carriers SC24 to SC35 constitute normal power region NR2, i.e. normal power region NR. Sub-carriers SC48 to SC59 constitute normal power region NR3, and sub-carriers SC60 to SC71 constitute normal power region NR4, i.e. normal power region NR'. Each power region LRi, NRi comprises a number of resource group regions RGRi and a number of resource block regions RBRj, as explained in detail above.

Generally, employing this type of resource structure in accordance with the present invention, one or more resource groups RGj of the given size (defined in terms of a number of sub-carriers SCi) are allocated in one or more resource group regions RGRi within a low power region LRi and / or within a normal power region NRi.

In the example of Fig. 9, resource block size is ten sub-carriers. Resource group size is two sub-carriers for low power regions and four sub-carriers for normal power regions. One resource block RB1 with ten sub-carriers SC2 to SC11 is allocated in one resource block region RBR1 within low power region LR1. One resource group RG1 comprising four sub-carriers SC13, SC25, SC49 and SC61 is allocated in four resource group regions RGR2, RGR3, RGR5, RGR6 within four different normal power regions NR1 - NR4.

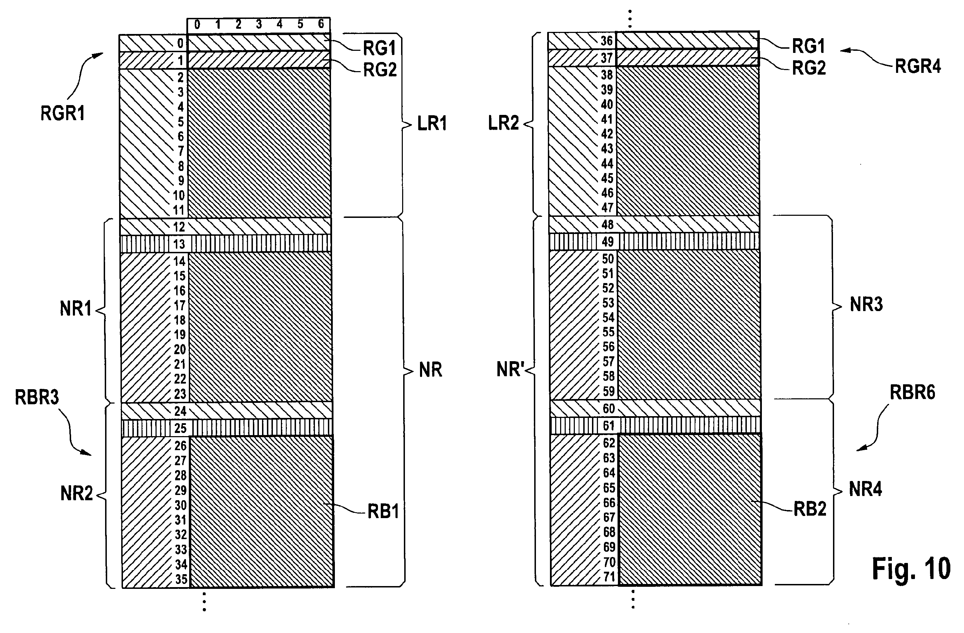

Fig. 10 shows a schematic diagram of a further example of sub-carrier allocation using the method in accordance with the present invention. In the embodiment shown, resource block size is again ten sub-carriers. A resource group size comprises two sub-carriers for low power regions LR1, LR2 and two sub-carriers for each of normal power regions LR1 - LR4.

As can be gathered from Fig. 10, two resource blocks RB1, RB2 comprising ten sub-carriers each (SC26 to SC35 and SC62 to SC71, respectively) are allocated in two resource block regions RBR3, RBR6 within two normal power regions NR2, NR4.

In addition, two resource groups RG1, RG2 with two sub-carriers each (SC0, SC36 and SC1, SC37, respectively) are allocated in two resource group regions RGR1, RGR4 within two low power regions LR1, LR2.

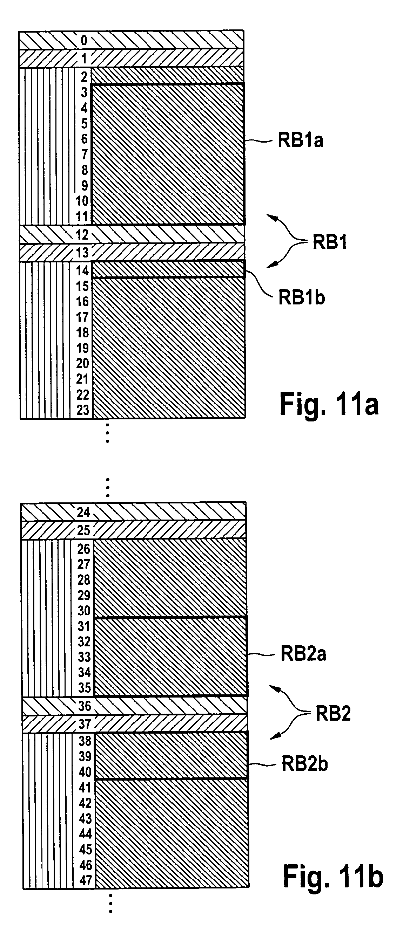

As stated above, resource blocks generally comprise a number of consecutive sub-carriers (arranged in blockwise fashion) for a number of consecutive OFDM symbols in time. However, according to further embodiments of the present invention a sequence formed by consecutive sub-carriers within a resource block can be interrupted by successive resource group sub-carriers, i.e. sub-carriers defined as belonging to a resource group region. Two different general cases can be distinguished in this context, which are illustrated in appended Figs. 11 a, 11 b.

Figs. 11 a, b show schematic diagrams of examples of resource region definition using an embodiment of the method in accordance with the present invention. In the embodiment of Fig. 11a resource block RB1 comprising sub-carriers SC3 to SC11 and SC14 is interrupted by resource group sub-carriers SC12, SC13. Compared with a nominal resource block size of, for instance, ten sub-carriers (cf. above), the resource block size is not reduced by the number of interrupting resource group sub-carriers in the case of Fig. 11 a.

In contrast to this, in the embodiment of Fig. 11 b resource block RB2, which is interrupted by successive resource groups sub-carriers SC36, SC37, is reduced in size by the number of interrupting resource group sub-carriers, i.e., the resource block size of resource block RB2 is only eight instead of ten sub-carriers.

In other words, in the context of the embodiments of Figs. 11 a and 11 b, a nominal resource block size is ten sub-carriers. However, resource block RB2, which is interrupted by two successive sub-carriers SC36, SC37 belonging to (two different) resource groups, is split up into a resource block part RB2a including five sub-carriers SC31 to SC35 and a resource block part RB2b consisting of three sub-carriers SC38 to SC40. Said resource block parts RB2a, RB2b can be allocated within any combination of low and normal power regions, as required.

In contrast to this, in the context of Fig. 11a, resource block RB1, which is interrupted by two successive sub-carriers SC12, SC13 belonging to two resource groups, is split up into a resource block part RB1a including nine sub-carriers SC3 to SC11 and a resource block part RB1 b consisting of only one sub-carrier SC14. Again, resource block parts RB1 a, RB1 b can be allocated in two resource block regions within any combination of low and normal power regions, as required.

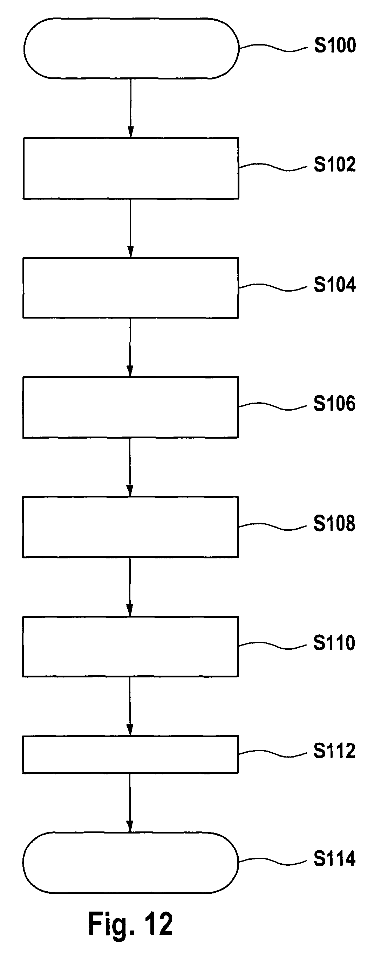

Fig. 12 shows a flow chart for illustrating signalling used in the context of an embodiment of the method in accordance with the present invention. The signalling involving processing of resource structure information as described below with reference to Fig. 12 is specifically related to the exemplary resource structure described above with reference to Fig. 5.

In the flow chart of Fig. 12 it is assumed, that system type information comprising, e.g., a total number of available sub-carriers and positions of control channels (not shown) is known to the signalling parties, i.e. base station 3 and end terminals 4.1 - 4.3 (Fig. 1).

The method starts with step S100. In subsequent step S102 a first amount of information is broadcast from base station 3 (Fig. 1, 2) to end terminals 4.1 - 4.3 present inside transmission cell 1 (Fig. 1) by means of broadcasting means 3h (Fig. 2). Said first amount of broadcast information comprises data descriptive of a definition of the resource group size, e.g. 20 sub-carriers. Then, in subsequent step S104 a further amount of information is broadcast to the end terminals, said information comprising data descriptive of a position (spectral location) of a first resource group region defined in terms of a specific sub-carrier, e.g. sub-carrier SC20. Then, in subsequent step S106 information concerning a size of individual resource group regions is broadcast from base station 3 (Fig. 1) to end terminals 4.1 - 4.3. Sizes of individual resource group regions are defined in terms of a number of comprised sub-carriers, e.g. seven.

In step S108 positions (spectral locations) of all resource group regions are calculated based on the above-defined broadcast information. In subsequent step S110 positions (spectral locations) of all resource block regions are determined based on said broadcast information, too. To this end the signalling parties, i.e. base station 3 and end terminals 4.1 - 4.3 (Fig. 1) may comprise corresponding calculating / determining means (not shown) within their respective data processing means 3a (Fig. 2) and 4a (Fig. 3), respectively. Said calculating / determining means are preferably devised in software form.

Then, in subsequent step S112 at least said calculated spectral locations are stored as a resource structure in the storing means 3b, 4b of both base station 3 and end terminals 4.1 - 4.3, respectively. The method terminates with step S114.

Advantageously, in accordance with further embodiments of the present invention, sizes or portions of individual resource regions may be limited with respect to both pre-definition and adaptation. For instance, a resource block region may be limited to covering at least ten sub-carriers. Alternatively or additionally, a portion of resource group regions may be limited to 60% of a total number of sub-carriers available for OFDM transmission. Furthermore, positions of the resource regions may be pre-defined. For instance, resource group regions may be limited to being positioned at the beginning of each power region, i.e. lowest sub-carrier numbers in each power region.

In this way, owing to the knowledge of the involved parties, e.g. base station and UEs, about a defined resource structure fast allocation of resources with low signalling effort is achievable in accordance with a general concept of the present invention. Additionally, further subdivision of the resource structure is possible for improved interference coordination purposes. Equal spacing of resource group sub-carriers advantageously contributes to the required low signalling effort.

## Claims

1. A method of allocating sub-carriers (SCi) for communication with at least one end terminal (4, 4.1 - 4.3) in OFDM transmission, **characterised by** the steps of:
- defining mutually spaced resource regions (RGRi) of a first type based on an available spectrum (BW) of sub-carriers, each of said regions comprising a number of consecutive sub-carriers for a number of consecutive OFDM symbols;
- defining mutually spaced resource regions (RBRj) of a second type based on the available spectrum of sub-carriers, each of said regions comprising a number of consecutive sub-carriers for a number of consecutive OFDM symbols;
- choosing a number of mutually isolated or mutually adjacent sub-carriers from at least one of said first type resource regions for distributed sub-carrier allocation (DA);
- choosing a number of mutually adjacent sub-carriers from at least one of said second type resource regions for localised sub-carrier allocation (LA);
- allocating the chosen sub-carriers for communication with the at least one end terminal.

2. The method of claim 1, **characterised in that** the step of defining said first type resource regions (RGRi) includes equally spacing said first type resource regions.

3. The method of claim 1, **characterised in that** the step of defining said second type resource regions (RBRj) includes equally spacing said second type resource regions.

4. The method of claim 1, further comprising the step of adapting a size (xRGR, xRBR) and / or spectral location of said first type resource regions (RGRi) and / or said second type resource regions (RBRj) in response to transmission-related information.

5. The method of claim 1, further comprising the step of defining at least respective parts of a number of said first type resource regions (RGRi) and / or at least respective parts of a number of said second type resource regions (RBRj) as having a specific OFDM transmission characteristic, particularly a reduced transmission power.

6. The method of claim 1, further comprising storing structure information concerning a resource structure formed by the defined first and second type resource regions (RGRi, RBRj) at the at least one end terminal (4, 4.1 - 4.3) and / or at at least one base station (3) in operative connection with the end terminal.

7. The method of claim 1, **characterised in that** the defining steps comprise:
- communicating a required number of at least one of said first and second type resource regions (RGRi, RBRj);
- communicating a spectral location of a first predetermined one of the at least one of said first and second type resource regions;
- communicating a size of the at least one of said first and second type resource regions;
- determining respective spectral locations of said first and second type resource regions.

8. A base station (3) for use in OFDM transmission to at least one end terminal (4, 4.1 - 4.3), comprising:
- means (3c) for partitioning a first part of an available spectrum (BW) of sub-carriers (SCi) into mutually spaced resource regions (RGRi) of a first type, each of said regions comprising a number of consecutive sub-carriers for a number of consecutive OFDM symbols;
- means (3d) for partitioning a remaining part of the available spectrum of sub-carriers into mutually spaced resource regions (RBRj) of a second type, each of said regions comprising a number of consecutive sub-carriers for a number of consecutive OFDM symbols;
- means (3e) for selecting a number of mutually isolated or mutually adjacent sub-carriers from at least one of said first type resource regions for distributed sub-carrier allocation (DA);
- means (3f) for selecting a number of mutually adjacent sub-carriers from at least one of said second type resource regions for localised sub-carrier allocation (LA);
- means (3g) for allocating the chosen sub-carriers for communication with the at least one end terminal.

9. An end terminal (4, 4.1 - 4.3), particularly a mobile station, for use in OFDM communication with the base station (3) of claim 8, comprising means (4d) for establishing and / or maintaining said communication on the basis of the allocated sub-carriers (SCi).

10. A computer program product, comprising program code sequences for downloading on a base station (3) for use in OFDM transmission to at least one end terminal (4, 4.1 - 4.3) and / or for installing on an end terminal (4, 4.1 - 4.3), particularly a mobile station, for use in OFDM communication with said base station (3), **characterised in that** said program code sequences implement on said base station:
- means (3c) for partitioning a first part of an available spectrum (BW) of sub-carriers into mutually spaced resource regions (RGRi) of a first type, each of said regions comprising a number of consecutive sub-carriers for a number of consecutive OFDM symbols;
- means (3d) for partitioning a remaining part of the available spectrum of sub-carriers into mutually spaced resource regions (RBRj) of a second type, each of said regions comprising a number of consecutive sub-carriers for a number of consecutive OFDM symbols;
- means (3e) for selecting a number of mutually isolated or mutually adjacent sub-carriers from at least one of said first type resource regions for distributed sub-carrier allocation (DA);
- means (3f) for selecting a number of mutually adjacent sub-carriers from at least one of said second type resource regions for localised sub-carrier allocation (LA);
- means (3g) for allocating the chosen sub-carriers for communication with the at least one end terminal;
and **in that** said program code sequences implement on said end terminal means (4d) for establishing and / or maintaining said communication on the basis of the allocated sub-carriers (SCi).
